# EUROPEAN PATENT APPLICATION

(11) **EP 4 808 043 A1**
(43) Date of publication of application: **16.09.2026**
(21) Application number: 25163843.3
(22) Date of filing: 14.03.2025
(51) Int. Cl.: H04L 9/40

(54) **DETECTING ERRORS IN DEVICE IDENTIFICATION**

(71) Applicant: Cujo LLC, Covina, CA 91723 (US)
(72) Inventor: Trinin, Ehud, 6473118 Tel Aviv (IL)
(74) Representative: Marks & Clerk LLP

(57) **Abstract**

A first connected device is identified (102) based on a first data transmission to a first customer-premises equipment of a network. A second connected device is identified (104) based on a second data transmission to a second customer-premises equipment of the network. In response to detecting (106) additional data related to the first connected device and the second connected device, it is determined (108) whether one of a false negative identity error or a false positive identity error was made in identifying (104) the second connected device based on the second data transmission to the second customer-premises equipment of the network.

## Description

### FIELD

The invention relates to a method, apparatus, computer program product, and computer-readable medium.

### BACKGROUND

Device identification is a capability of a data system to detect and identify a connected device as it connects to a local area network (LAN) provided by a customer-premises equipment (CPE). The data system creates a device identifier for the connected device as it connects to the local area network. The data system stores device fingerprints extracted from previous sessions for each device identifier. When the connected device connects to the local area network, the data system attempts to identify whether the connected device is related to an existing connected device (a connected device that has previously connected and consequently already has a device identifier) based on the device fingerprints stored with each device identifier and a device fingerprint extracted from the connecting device during the current session. If the connected device is not matched to any existing device identifier, a new device identifier is created for the connected device. A new device identifier may erroneously be created even if the session should have related to an existing device identifier due to an insufficient confidence in matching of the stored device fingerprints and the current session device fingerprint. Such errors are known as false negative identity errors. A current session may also erroneously be matched to an existing connected device. Such errors are known as false positive identity errors. To improve the reliability of the device identification, both false negative identity errors and false positive identity errors need to be detected.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A, FIG. 1B, FIG. 1C, FIG. 1D, and FIG. 1E are flowcharts illustrating examples of a method;
FIG. 2A and FIG. 2B are block diagrams illustrating example implementation environments for the method;
FIG. 3A and FIG. 3B are block diagrams illustrating examples of a cybersecurity apparatus;
FIG. 4 is a block diagram illustrating an example of a connected device;
FIG. 5 is a block diagram illustrating an example of a computing resource; and
FIG. 6A and FIG. 6B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The device identification detects and identifies the connected device based on its device fingerprint as it connects to the local area network provided by the customer-premises equipment. The result of the device identification is that the currently connecting connected device is a new (= not previously identified) connected device or an existing (= previously identified) connected device. This means that a first connected device has previously been identified, and as a second connected device is currently being identified, the result is either that the second connected device matches with the previously identified first connected device, which means that they are a same single connected device, or the second connected device does not match with the previously identified first connected device, which means that they are two different connected devices. The method that will be described uses additional data (beyond the two device identification processes) related to the first connected device and the second connected device to determine whether an error in the device identification of the second connected device was made. With this determination, eventual errors in device identification may be detected and mitigated, but also prevented.

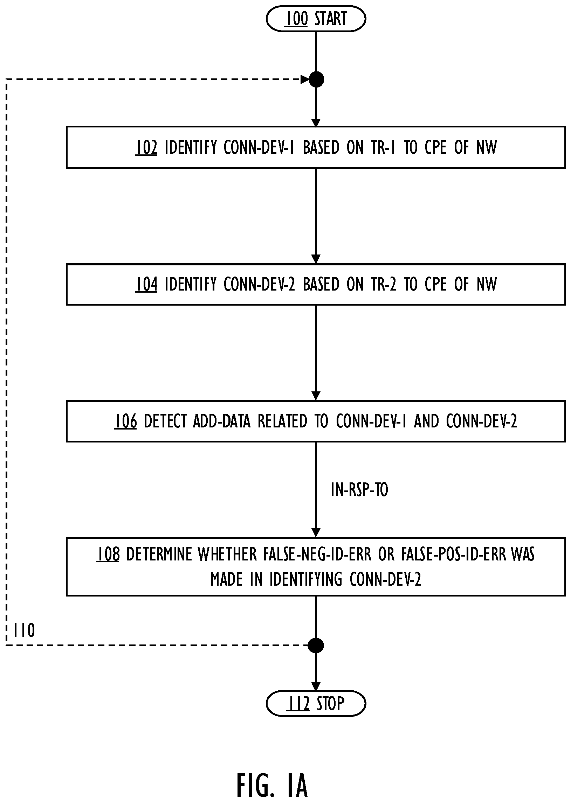

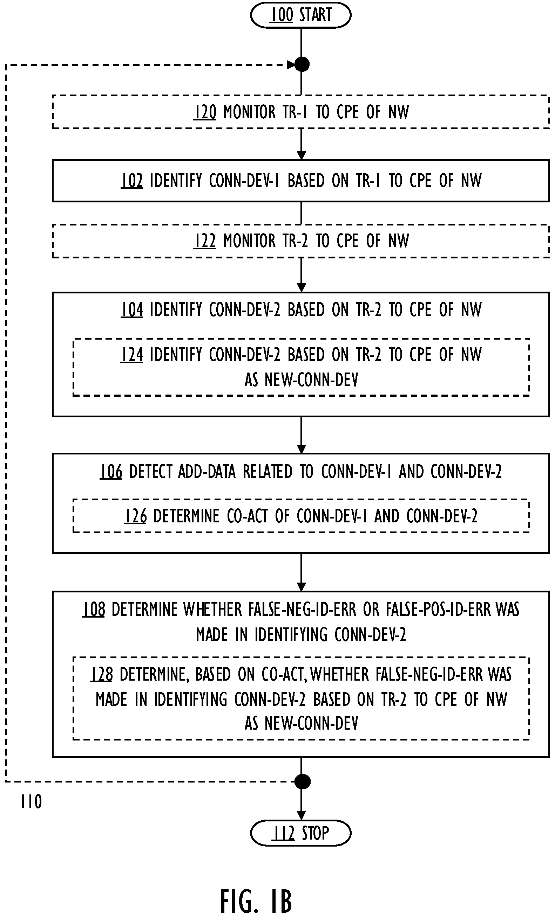

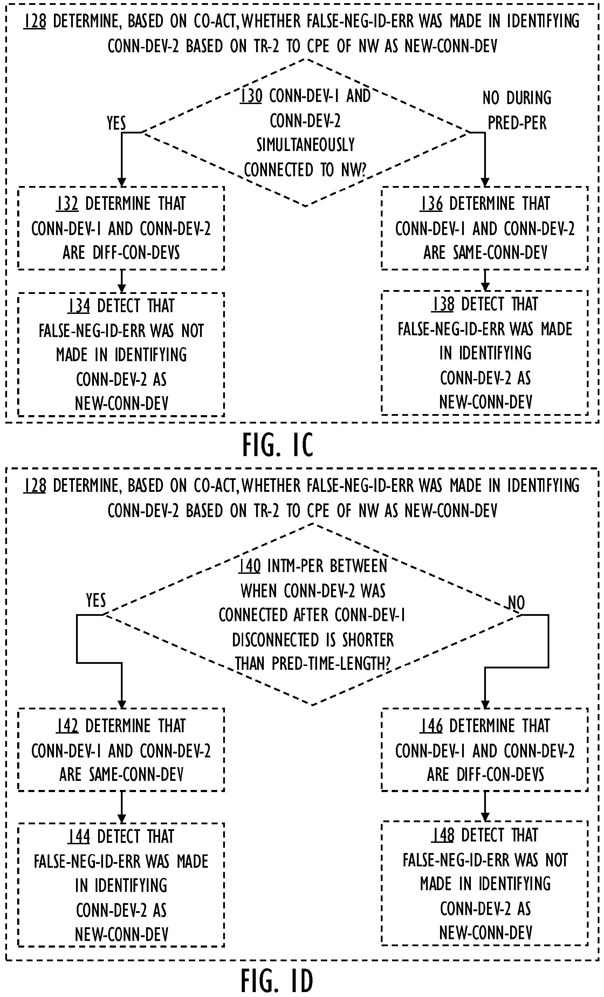

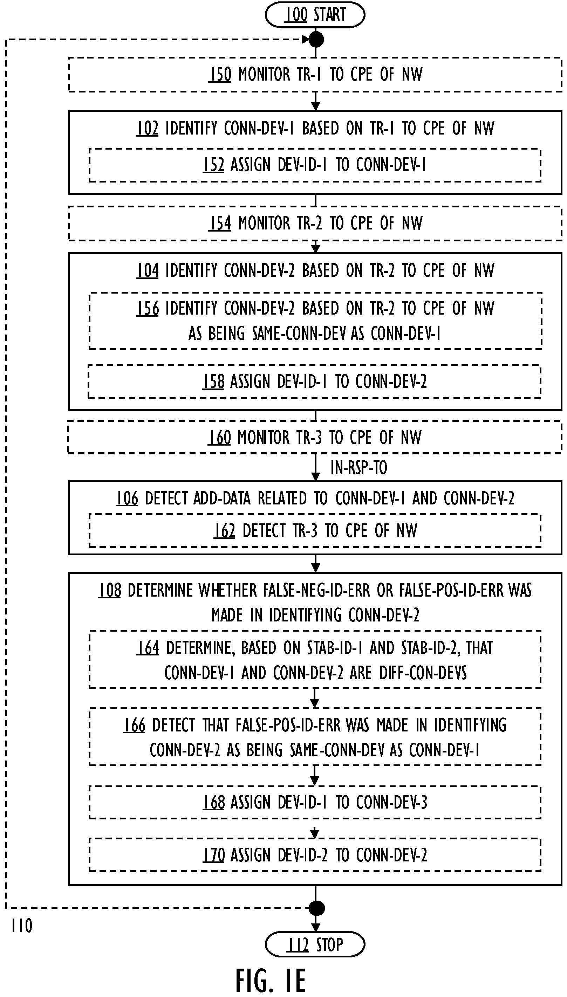

FIG. 1A, FIG. 1B, FIG. 1C, FIG. 1D, and FIG. 1E are flowcharts illustrating examples of a computer-implemented method. The method performs operations related to detecting errors in a device identification. The method starts in 100 and ends in 112. The method may run in principle endlessly. The infinite running may be achieved by looping 110 back.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

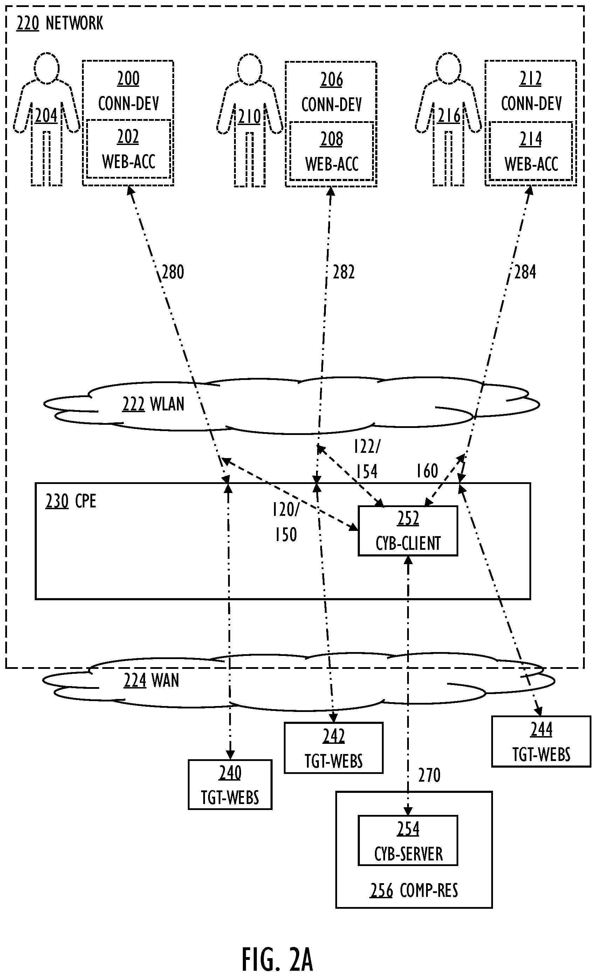

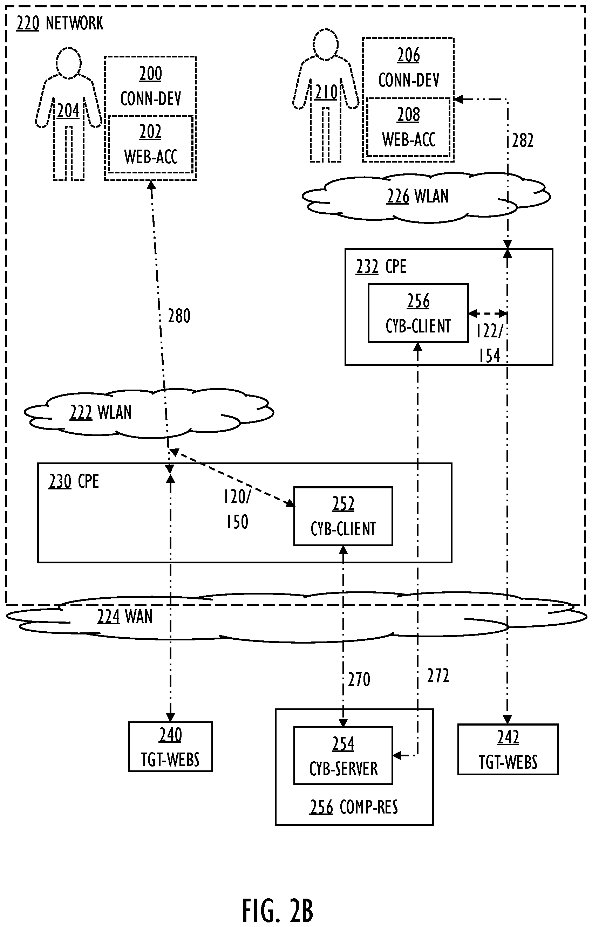

FIG. 2A and FIG. 2B are block diagrams illustrating example implementation environments for the computer-implemented method. The method may operate within the customer-premises equipment 230, but optionally also partly within the computing resource 256.

A first connected device 200 is identified 102 based on a first data transmission 280 to a first customer-premises equipment 230 of a network 220. As a part of the device identification 102, the first connected device 200 may be mapped to a first device identifier. The device identifier may be generated as a part of the device identification process 102, but it may also be a device identifier obtained from the data transmission, such as a MAC address. The device identifier may refer to one or more unique identifiers of a specific connected device, which is being used to distinguish a specific connected device from other connected devices within the network 220, and possibly associate the connected device with features, log history, and any other data stored in an information system of the network 220. Some of the device identifiers are highly reliable, but do not always appear in the traffic, and/or may switch their value from time to time, while other device identifiers are statistical by nature.

A second connected device 206 is identified 104 based on a second data transmission 282 to a second customer-premises equipment 230/232 of the network 220. As a part of the device identification 104, the second connected device 206 may be mapped to a second device identifier (that may be generated as a part of the device identification process 104).

In FIG. 2A, both the first data transmission 280 and the second data transmission 282 are to a same customer-premises equipment 230. In FIG. 2B, the first data transmission is to the (first) customer-premises equipment 230, but the second data transmission 282 is to the (second) customer-premises equipment 232. The "network" 220 refers to a communication network provided by a network service provider (NSP). Accordingly, the first customer-premises equipment 230 and the second customer-premises equipment 232 belong to the same network 220 (of the network service provider). Later in the method, a third data transmission 284 to a third customer-premises equipment 230 of the network 220 will be introduced. As shown in FIG. 2A, the first customer-premises equipment, the second customer-premises equipment, and the third customer-premises equipment all refer to a same customer-premises equipment 230. But other configurations are also feasible: in FIG. 2B, the first customer-premises equipment 230, and the second customer-premises equipment 232 are different customer-premises equipment. The third customer-premises equipment may then be a same customer-premises equipment as the first customer-premises equipment 230, or a same customer-premises equipment as the second customer-premises equipment 232. Or the first customer-premises equipment 230, the second customer-premises equipment 232, and the third customer-premises equipment all are different customer-premises equipment.

After these two identification operations, 102, 104, additional data related to the first connected device 200 and the second connected device 206 is detected 106. The additional data does not directly relate to the first device identification 102 and the second device identification 104, or the additional data is not a part of the data generated during the first device identification 102 and the second device identification 104. The additional data may contain a data expressing a relation (such as a temporal relation) of the two device identification operations 102, 104, or the additional data may be a part of an additional device identification operation.

In response to detecting 106 the additional data related to the first connected device 200 and the second connected device 204, it is determined 108 whether one of a false negative identity error or a false positive identity error was made in identifying 104 the second connected device 206 based on the second data transmission 282 to the (second) customer-premises equipment 230 of the network 220.

In this way using the operations 106 and 108, the identification 104 of the second connected device 206 may be verified. The outcome of the verification is an assessment of whether the device identification 104 succeeded or whether the false negative identity error or the false positive identity error was made in the identification 104 of the second connected device 206. The device identification 104 of the second connected device 206 has four possible outcomes:
1) correctly identifying 104 the second connected device 206 based on the second data transmission 282 as a new connected device, i.e., the second connected device 206 is a different connected device than the first connected device 200;
2) incorrectly identifying 104 the second connected device 206 based on the second data transmission 282 as a new connected device, i.e., the second connected device 206 is a same connected device as the first connected device 200, thereby causing the false negative identity error;
3) correctly identifying 104 the second connected device 206 based on the second data transmission 282 as a same connected device as the first connected device 200; and
4) incorrectly identifying 104 the second connected device 206 based on the second data transmission 282 as a same connected device as the first connected device 200, i.e., the second connected device 206 is a different connected device than the first connected device 200, thereby causing the false positive identity error.

Outcomes 1) and 3) are correct, and the challenge is to detect the incorrect outcomes 2) and 4). Still, the verification that the outcomes 1) and 3) are correct is also useful. The verification is achieved by analyzing the relation of the second device identification 104 to the first device identification 102 in view of the detected 106 additional data.

Next, various examples for detecting the incorrect outcome 2) are explained with reference to FIG. 1B, FIG. 1C, and FIG. 1D. These examples are based on an analysis of (historical) co-activity.

The identification of 104 the second connected device 206 comprises identifying 124 the second connected device 206, based on the second data transmission 282 to (second) the customer-premises equipment 230 of the network 220, as a new connected device. The question then is whether this outcome is the correct outcome 1) or the incorrect outcome 2).

The detection 106 of the additional data may comprise determining 126 a co-activity of the first connected device 200 and the second connected device 206. The co-activity defines a degree of the first connected device 200 and the second connected device 206 being simultaneously connected to the network 220. Note that a statistical based decision of matching in identifying 104 the second connected device 206 may deliberately be delayed in order to gain a longer period for determining 126 the co-activity before determining 108 whether the false negative identity error was made in identifying 104 the second connected device 206. In this way, the operation 104 is delayed until operation 106 is finished and operation 108 is then executed. Besides determining whether the false negative identity error was made, the false negative identity error may be prevented as operations 106 and 108 are performed successively without any delay in between (and if the operation 108 indicates that the false negative identity error was made, the result of the operation 106 is prevented from entering into force).

The determination 126 of the co-activity may be based on activity data collected from each wireless local area network 222, 226. The customer-premises equipment 230, 232 continuously track which MAC addresses are connected to them at a given time. This mechanism is not perfect, since there may be a short delay since a MAC address was disconnected until the customer-premises equipment 230, 232 detected that based on a non-activity timeout. However, this timeout is truly short, making this mechanism reliable. Based on this customer-premises equipment 230, 232 activity tracking, it is possible to infer periods during which each MAC address was connected, and which MAC addresses were active simultaneously. The mechanism described above is related to MAC addresses and not to connected devices 200, 206 directly. This is not always the same thing as the connected device 200, 206 may use different MAC addresses for different frequency bands. Additionally, the connected device 200, 206 may replace its MAC address (with the MAC randomization). However, based on the MAC address, the determination 126 of the co-activity of the connected devices 200, 206 is often possible.

In case the connected device 200, 206 has different MAC addresses for different frequency bands then the co-activity may be determined 126 in two complementary ways. First, the processing described above may be extended. Given that the MAC addresses of different frequency bands are kept for each connected device 200, 206 along their frequency band, it is sufficient for detecting the co-activity of the two connected devices 200, 206 that they had an active MAC address on the same frequency band during a time period. Second, the activity data may be used to identify whether the two connected devices 200, 206 were simultaneously connected through whatever frequency band during a time period. These two detection mechanisms are complementary, since the first may detect co-activity also in cases where the connected devices 200, 206 were not simultaneously connected, while the second may detect co-activity also in cases the connected devices 200, 206 were connected through different frequency bands.

The historical co-activity profile improves false negative identity error detection in two ways. First, if it is determined two device identifiers (such as MAC addresses) were co-active, they may be excluded from any attempt to merge the device identifiers. That prevents wrong merging of device identifiers. Second, the historical co-activity may be used also as an error correcting identifier. The longer the time two connected devices 200, 206 were not co-active, the higher the probability they are a same connected device. Additionally, the shorter the time one connected device 206 started to appear after the other connected device 200 stopped appearing, the higher the probability they are a same connected device. These two variables, i.e., the period of no co-activity, and the period one device identifier appeared after the other device identifier stopped to appear, may be used as further inputs to a machine learning model that determines whether two device identifiers represent a same connected device.

The determination 108 comprises determining 128, based on the co-activity, whether the false negative identity error was made in identifying 124 the second connected device 206, based on the second data transmission 282 to the (second) customer-premises equipment 230 of the network 220, as the new connected device. As was explained earlier, the false negative identity error is caused by incorrectly identifying 124 the second connected device 206, based on the second data transmission 282 to the (second) customer-premises equipment 230 of the network 220, as the new connected device.

The determination 128 may be done at least in four different ways illustrated in FIG. 1C and FIG. 1D, without limiting the determination 128 to these.

In the first example of the determination 128, in response to the co-activity indicating 130-YES that the first connected device 200 and the second connected device 206 were simultaneously connected to the network 220, it is determined 132 that the first connected device 200 and the second connected device 206 are different connected devices, and it is detected 134 that the false negative identity error was not made in identifying 124 the second connected device 206, based on the second data transmission 282 to the (second) customer-premises equipment 230 of the network 220, as the new connected device.

In the second example of the determination 128, in response to the co-activity indicating 130-NO that the first connected device 200 and the second connected device 206 were not simultaneously connected to the network 220 during at least a predetermined time period, it is determined 136 that the first connected device 200 and the second connected device 206 are a same connected device, and it is detected 138 that the false negative identity error was made in identifying 124 the second connected device 206, based on the second data transmission 282 to the (second) customer-premises equipment 230 of the network 220, as the new connected device.

In the third example of the determination 128, in response to the co-activity indicating 140-YES that an intermediate time period between when the second connected device 206 was connected to the network 220 after the first connected device 200 disconnected from the network 220 is shorter than a predetermined time length, it is determined 142 that the first connected device 200 and the second connected device 206 are a same connected device, and it is detected 144 that the false negative identity error was made in identifying 124 the second connected device 230, based on the second data transmission 282 to the (second) customer-premises equipment 230 of the network 220, as the new connected device.

In the fourth example of the determination 128, in response to the co-activity indicating 140-NO that an intermediate time period between when the second connected device 206 was connected to the network 220 after the first connected device 200 disconnected from the network 220 is longer than the predetermined time length, it is determined 146 that the first connected device 200 and the second connected device 206 are different connected devices, and it is detected 148 that the false negative identity error was not made in identifying 124 the second connected device 230, based on the second data transmission 282 to the (second) customer-premises equipment 230 of the network 220, as the new connected device. In other words, the shorter the period between the second connected device 206 started to appear after the first connected device 200 stopped appearing, the higher the probability they are a same connected device.

These four examples may also be used so that if during a relatively long period, like one week, it is not possible to determine that the first connected device 200 and the second connected device 206 are different connected devices, it may be inferred that they are a same connected device.

In an example, a first connected device 200 connects to the (first) customer-premises equipment 230, is identified 102, and matched to a first device identifier. At the same time, a second connected device 206 connects to the (second) customer-premises equipment 230, is identified 104, and matched to a second device identifier. Consequently, it is determined 132 that the first connected device 200 and the second connected device 206 are different connected devices, and this information is stored. Then the first connected device 200 disconnects from the (first) customer-premises equipment 230, and also the second connected device 206 disconnects from the (second) customer-premises equipment 230. After some time, the second connected device 206 connects to the (second) customer-premises equipment 230, and its device identification shows similar properties to that of first connected device 200. However, based on the stored information that the first connected device 200 and the second connected device 206 are different devices, their merging is not made, thereby avoiding a false positive identity error.

In an example, a first connected device 200 connects to the (first) customer-premises equipment 230, is identified, and matched to a first device identifier. Then the first connected device 200 disconnects from the (first) customer-premises equipment 230. After this, a second connected device 206 connects to the (second) customer-premises equipment 230, is identified, and matched to a second device identifier. At the same time, a third connected device 212 connects to a (third) customer-premises equipment 230, is identified, and matched to a third device identifier. Consequently, it is determined that the second connected device 206 and the third connected device 212 are different connected devices, and this information is stored. Then the second connected device 206 disconnects from the (second) customer-premises equipment 230, and also the third connected device 212 disconnects from the (third) customer-premises equipment 230. After some time, the third connected device 212 connects to the (third) customer-premises equipment 230, its device identification gathers more properties, and it is checked whether the third connected device 212 may be merged with another device identifier earlier present in the home network 222. An analysis shows that the third connected device 212 shows similar properties to both the first connected device 200 and the second connected device 206, so to avoid an error no merging would be made. However, based on the stored information that the second connected device 206 and the third connected device 212 are different connected devices, it may be inferred that the third connected device 212 and the first connected device 200 are a same connected device, and their device identifiers are merged.

FIG. 1B also illustrates an example, wherein, prior to identifying 102 the first connected device 200 based on the first data transmission 280 to the (first) customer-premises equipment 230 of the network 220, the first data transmission 280 to the (first) customer-premises equipment 230 of the network 220 is monitored 120, and prior to identifying 104 the second connected device 206 based on the second data transmission 282 to the (second) customer-premises equipment 230 of the network 220, the second data transmission 282 to the (second) customer-premises equipment 230 of the network 220 is monitored 122.

Next, various examples for detecting the incorrect outcome 4) are explained with reference to FIG. 1E. These examples are based on an analysis of periodically stable identifier values.

The identification 104 of the second connected device 206 comprises identifying 156 the second connected device 206 based on the second data transmission 282 to the (second) customer-premises equipment 230 of the network 220 as being a same connected device as the first connected device 200. The question then is whether this outcome is the correct outcome 3) or the incorrect outcome 4).

In the examples of FIG. 1E, the first data transmission 280 is related to a first periodically stable identifier value, and the second data transmission 282 is related to a second periodically stable identifier value. The detection 106 of the additional data comprises detecting 162 a third data transmission 284 to a (third) customer-premises equipment 230 of the network 220. The third data transmission 284 is related to the first periodically stable identifier value.

The periodically stable identifier may be defined as an identifier that has the following properties:
1) The periodically stable identifier has a very low probability that another device in the same home network would present the same identifier.
2) The periodically stable identifier may change its value from time to time.
3) The periodically stable identifier does not repeat, i.e., there is a very low probability that the identifier would change its value to an earlier, past value.

The periodically stable identifier may be a random media access control (MAC) address, which comprises 48 bits, of which 2 bits are multicast and local flags while 46 bits are generated randomly whenever random MAC address is created or changed.

Because of a huge number of possible random MAC addresses (2⁴⁶), the above properties 1 and 3 apply. Additionally, property 2 applies as well, since random MAC addresses are changed due to a variety of reasons. Current versions of Apple^{®} operating systems (such as iOS 16.1, iPadOS, macOS 13, tvOS, watchOS, and visionOS) with rotating MAC configurations change MAC addresses every two weeks after reconnecting. Additionally, these operating systems change the random MAC address, in both fixed and rotating configurations, after forgetting and reconnecting if the network was not used for 24 hours, when reconnecting after a network reset or a factory reset, and following a change of a service set identifier (SSID).

Android^{®} and Microsoft^{®} Windows operating systems with a non-persistent MAC configuration change the MAC address every 24 hours after reconnecting, and after forgetting and reconnecting. Additionally, these operating systems change the random MAC address, in both persistent and non-persistent configurations, when reconnecting after a network reset or a factory reset, and following a change of SSID.

The periodically stable identifier may also be an uncommon dynamic host configuration protocol (DHCP) hostname. The uncommon DHCP hostname refers to any hostname value that is not common. Common DHCP hostnames are usually based on default factory names or very common personal names. After excluding the common hostnames from being used, all other hostnames satisfy property 1, i.e., there is a very low probability that multiple devices in the same home network would present the same uncommon identifier. Property 2 applies since a user may change the hostname from time to time. Property 3 applies since normally users do not change names.

In an example of the determination 108, it is determined 164, based on the first periodically stable identifier value and the second periodically stable identifier value, that the first connected device 200 and the second connected device 206 are different connected devices, and it is detected 166 that the false positive identity error was made in identifying 156 the second connected device 206 based on the second data transmission 282 to the (second) customer-premises equipment 230 of the network 220 as being the same connected device as the first connected device 200. As was explained earlier, the false positive identity error is caused by incorrectly identifying 156 the second connected device 206 based on the second data transmission 282 to the (second) customer-premises equipment 230 of the network 220 as being the same connected device as the first connected device 200.

Note that a statistical based decision of matching in identifying 104 the second connected device 206 may deliberately be delayed in order to gain a longer period for detecting 162 the third data transmission 284 before determining 108 whether the false positive identity error was made in identifying 104 the second connected device 206. In this way, the operation 104 is delayed until operation 106 is finished and operation 108 is then executed. Besides determining whether the false positive identity error was made, the false positive identity error may be prevented as operations 106 and 108 are performed successively without any delay in between (and if the operation 108 indicates that the false positive identity error was made, the result of the operation 106 is prevented from entering into force).

In an example, the first periodically stable identifier value comprises a first random media access control (MAC) address, and the second periodically stable identifier value comprises a second random MAC address. The first random MAC address and the second random MAC address may have been generated by the MAC randomization. The MAC address is a unique identifier assigned to network interfaces for communications on the physical network segment. Traditionally, the MAC addresses are static and may be used to track a connected device across different networks. The MAC randomization generates a random, temporary MAC address instead of the real, static MAC address for the connected device 200, 206, 212 to be used when connecting to the customer-premises equipment 230. The connected device 200, 206, 212 may use a persistent randomized MAC address for each network, which remains the same until the network is forgotten, or a non-persistent randomized MAC address that is changed frequently. Apple^{®} iOS uses the MAC randomization, with iOS 14 introducing automatic randomization every 24 hours.

In an example, a first connected device 200 connects to the (first) customer-premises equipment 230, is identified, a first (randomized) MAC address is detected, and the first connected device 200 is matched to a first device identifier. Then the first connected device 200 disconnects from the (first) customer-premises equipment 230. After this, a second connected device 206 connects to the (second) customer-premises equipment 230, is identified as a same connected device as the first connected device 200, a second (randomized) MAC address is detected, and the second connected device 200 is matched to a second device identifier. Then the second connected device 206 disconnects from the (second) customer-premises equipment 230. After this, a third connected device 212 connects to the (third) customer-premises equipment 230, and the first MAC address is detected. Now it may be detected that an error has been made: as the MAC randomization always generates a new random MAC address it is not possible that the first connected device 200 would again use the first MAC address after it has used the second MAC address. Instead, it may be inferred that the first connected device 200 and the third connected device 212 are a same connected device 200, and the second connected device 206 is a different connected device. The possible number of different MAC addresses is huge, 2⁴⁷, so the possibility that two randomized MAC addresses were the same by a chance is extremely low. In the specific case of random MAC address, the detection methodology above may be boiled down to the detection of a reappeared random MAC address. For example, a number of previous random MAC addresses may be stored for each connected device 200, 206, 212. If such random MAC address reappears, then false positive identity error may be detected. In case a connected device 200 has different random MAC addresses for different frequency bands, previous MAC addresses are stored for all frequency bands.

In an example, a first connected device 200 connects to the (first) customer-premises equipment 230, is identified, a first (randomized) MAC address is detected, and the first connected device 200 is matched to a first device identifier. Then the first connected device 200 disconnects from the (first) customer-premises equipment 230. After this, a second connected device 206 connects to the (second) customer-premises equipment 230, is identified, a second (randomized) MAC address is detected, and the second connected device 206 is matched to a second device identifier. Then the second connected device 206 disconnects from the (second) customer-premises equipment 230. After this, the first connected device 200 connects to the (first) customer-premises equipment 230, the first MAC address is detected, and the first connected device 200 is matched to the first device identifier. Consequently, it is determined that the first connected device 200 and the second connected device 206 are different connected devices, and this information is stored for further use.

In an example the identification 102 of the first connected device 200 comprises assigning 152 a first device identifier to the first connected device 200, and the identification 104 of the second connected device 206 comprises assigning 158 the first device identifier to the second connected device 206.

Using these device identifiers, detecting 166 that the false positive identity error was made in identifying 156 the second connected device 206 based on the second data transmission 282 to the (second) customer-premises equipment 230 of the network 220 comprises assigning 168 the first device identifier to the third connected device 212, and assigning 170 a second device identifier to the second connected device 206. The device identifier may refer to a persistent identifier used by the network service provider commissioning the customer-premises equipment 230 to identify the connected devices 200, 206, 212 within a desired space, such as within a single customer-premises equipment 230 or within the network 220 comprising all commissioned (first, second, third) customer-premises equipment 230, 232, or commissioned (first, second, third) customer-premises equipment within a specific segment, such as a geographical area, of the network 220.

FIG. 1E also illustrates an example, wherein prior to identifying 102 the first connected device 200 based on the first data transmission 280 to the (first) customer-premises equipment 230 of the network 220, the first data transmission 280 to the (first) customer-premises equipment 230 of the network 220 is monitored 150, prior to identifying 104 the second connected device 206 based on the second data transmission 282 to the (second) customer-premises equipment 230 of the network 220, the second data transmission 282 to the (second) customer-premises equipment 230 of the network 220 is monitored 154, and prior to detecting 162 the third data transmission 284 to the (third) customer-premises equipment 230 of the network 220, the third data transmission 284 to the (third) customer-premises equipment 230 of the network 220 is monitored 160.

In an example, a first connected device 200 connects to the (first) customer-premises equipment 230, is identified, and the first connected device 200 is matched to a first device identifier. Then the first connected device 200 disconnects from the (first) customer-premises equipment 230. After this, a second connected device 206 connects to the (second) customer-premises equipment 230, is identified but not matched to any existing connected device, and the second connected device 206 is matched to a second device identifier. Then the second connected device 206 disconnects from the (second) customer-premises equipment 230. Actually, the identification of the second connected device 206 indicated that it may a same connected device as the first connected device 200, but with a too low confidence level, whereby the second connected device 206 was not matched with the first connected device 200. If a significant time period (such as one week) passes without getting any evidence by using the processing described above with reference to FIG. 1B, FIG. 1C, FIG. 1D, and FIG. 1E that the first connected device 200 and the second connected device 206 are different connected devices, it may be inferred that, in fact, the second connected device 206 and the first connected device 200 are a same device, whereby they may be merged (i.e., instead of storing their data as separate connected devices, the data is merged so as to represent a single connected device).

After this, the first connected device 200 connects to the (first) customer-premises equipment 230, the first MAC address is detected, and the first connected device 200 is matched to the first device identifier. Consequently, it is determined that the first connected device 200 and the second connected device 206 are different connected devices, and this information is stored for further use.

The described examples for detecting (and/or preventing) the incorrect outcome 2) based on an analysis of (historical) co-activity, and the described examples for detecting (and/or preventing) the incorrect outcome 4) based on an analysis of periodically stable identifier values may be alternative or complementary procedures.

As shown in FIG. 2A and FIG. 2B, wireless data transmissions 280, 282, 284 from a plurality of connected devices 200, 206, 212 of various device types to the (first, second, third) customer-premises equipment 230, 232 are monitored 120/150, 122/154, 160. This may be implemented so that the wireless data transmissions 280, 282, 284 are monitored by the (first, second, third) customer-premises equipment 230, 232 in its wireless local area network 222, 226.

As used herein, the term "connected device" 200, 206, 212 refers to a physical device with communication capabilities.

As used herein, the term "customer-premises equipment" 230, 232 refers to a physical device providing the wireless local area network 222, 226 for the connected devices 200, 206, 212 and an access for each connected device 200, 206, 212 to a wide area network (WAN) 224 such as the Internet.

The wireless data transmission 280, 282, 284 is transferred over a wireless connection between the connected device 200, 206, 212 and the (first, second, third) customer-premises equipment 230, 232. The connection is first established between the connected device 200, 206, 212 and the customer-premises equipment 230, 232. Next, the wireless data transmission 280, 282, 284 may extend from the connected device 200, 206, 212 via the WLAN 222, 226 and WAN 224 to a target website 240, 242, 244 using a Hypertext Transfer Protocol/Hypertext Transfer Protocol Secure (HTTP/HTTPS) connection. The establishment of the HTTP/HTTPS connection may also require a wireless data transmission with a domain name system (DNS) server (not illustrated in FIG. 2A, or FIG. 2B).

In the wireless data transmission 280, 282, 284, data packets may be transferred from and to the connected device 200, 206, 212. In an example, the (first, second, third) customer-premises equipment 230, 232 is configured to generate a wireless non-cellular internet access network 222, 232. The first customer-premises equipment 230 may be configured to operate at a home or an office of a user 204 of the connected device 200. The second customer-premises equipment 232 may be configured to operate out of home or office of the user 204 of the connected device 200. The user 204 may gain access to the customer-premises equipment 232 while visiting a home of a friend, for example.

Next, let us study how a cybersecurity operator is capable of monitoring the wireless data transmission 280, 282, 284

First, the wireless connection between the connected device 200 and the (first, second, third) customer-premises equipment 230 is monitored. A website access application, such as a web browser or an app running in the connected device 200 may seek to establish a connection to the target website 240, for example. As shown in FIG. 2A, the connection between the connected device 200 and the customer-premises equipment 230 is routed through an access of the WAN 224 to the target website 240 to implement the wireless data transmission 280.

The connected devices 200, 206, 212 (such as user devices or Internet of Things (IoT) devices) use websites for various operations. The user 204, 210, 216 of the (user) connected device 200, 206, 212 may use a browser to browse webpages of the website 240, 242, 244 to view media content provided on the webpages, or to connect to a service running on the website 240, 242, 244, for example. The (IoT) connected device 200 may upload sensor data gathered by one or more sensors onboard the connected device 200 to the website 240, for example. The connected device 200 may download a software update from the website 240, for example. Numerous other well-known operations related to the websites 240 may also be performed by the connected device 200.

The connected device 200, 206, 212 may be configured to execute the website access application, such as web user interface application (a web browser, for example), or a stand-alone application (a mobile app, for example), and as a result, the wireless data transmission 280, 282, 284 from the connected device 200, 206, 212 to the accessed website 240, 242, 244 via the LAN 222, 226 and the WAN 224 is performed. The website access application may automatically cause the wireless data transmission 280, 282, 284, or, alternatively, the wireless data transmission 280, 282, 284 may be generated as a result of an action by the user 204, 210, 216 through user interface controls of the website access application.

The connected device 200, 206, 212 may create the connection using a packet protocol from the website access application 202, 208, 214 of the connected device 200, 206, 212 to the target website 240, 242, 244. The target website 240, 242, 244 may host a server application enabling access by the website access application. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the wireless data transmission 280 (using TCP streams or UDP datagrams, for example). In the Internet Protocol suite, the wireless data transmission 280, 282, 284 is operated in a link layer, an internet layer, and a transport layer, and the requests transmitted in the wireless data transmission 280, 282, 284 are operated in an application layer.

As used herein, the term "monitoring" refers to user-approved lawful interception or monitoring of the wireless data transmission 280, 282, 284 with a purpose and goal of increasing cybersecurity related to the connected device 200, 206, 212 and its operating environment. As the radio signal of the wireless data transmission 280, 282, 284 is monitored, the wireless data transmission 280, 282, 284 is accessed and collected between the transmitting device and the receiving device. The wireless data transmission 280, 282, 284 may be monitored even if the digital data transmission units (such as messages) of the wireless data transmission 280, 282, 284 are addressed to the receiving device (such as the customer-premises equipment 230, 232, or the target website 240, 242, 244). The monitoring may be implemented so that the wireless data transmission 280, 282, 284 is passively monitored, i.e., the wireless data transmission 280, 282, 284 is not affected by the monitoring. Alternatively, if needed, the monitoring may include a seizing of the wireless data transmission 280, 282, 284, i.e., the wireless data transmission 280, 282, 284 is actively influenced so that a connection and/or requests and/or responses are blocked until it may be decided whether a cybersecurity action (such as blocking of the wireless data transmission 280, 282, 284) is required.

As used herein, the term "wireless data transmission" refers to the transmission and/or reception of (digital) data between the connected device 200, 206, 212 and the (first, second, third) customer-premises equipment 230, 232. The wireless data transmission 280, 282, 284 is transferred using digital data transmission units over a communication medium such as one or more communication channels between the connected device 200, 206, 212 and another network node such as the customer-premises equipment 230, 232 or the target website 240, 242, 244. Besides over radio interface in the WLAN 222, 226, the data may be conveyed over another transmission medium (implemented by copper wires, or optical fibers, for example) in the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200, 206, 212 and other network nodes to implement the successful and reliable wireless data transmission 280, 282, 284. The communication protocols may implement a protocol stack with different conceptual protocol layers.

The wireless data transmission 280, 282, 284 may be monitored by a cybersecurity client 252, 256 operating in the (first, second, third) customer-premises equipment 230, 232. The wireless data transmission 280, 282, 284 may be accessed and collected by the cybersecurity client 252, 256. The cybersecurity client 252, 256 may also access a data structure related to the wireless data transmission 280, 282, 284 established and maintained at the customer-premises equipment 230, 232 after a successful handshake sequence between the connected device 200, 206, 212 and the customer-premises equipment 230, 232. The monitored wireless data transmission 280, 282, 284 may be analyzed in order to perform an appropriate cybersecurity operation by the cybersecurity client 252, 256, possibly augmented by a cybersecurity server 254 operating in a networked computing resource 256. Machine learning algorithms may use a number of other data items (such as device-specific unique radio interface characteristics, and other active and historic unique identifiers related to the connected device 200, 206, 212 and its communication) to enable the device identification.

The WAN such as the Internet 224 uses the Internet Protocol suite including TCP/IP and UDP/IP to globally connect computer networks so that communication is enabled between the connected devices 200, 206, 212 and various Internet services provided typically by the websites 240, 242, 244. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

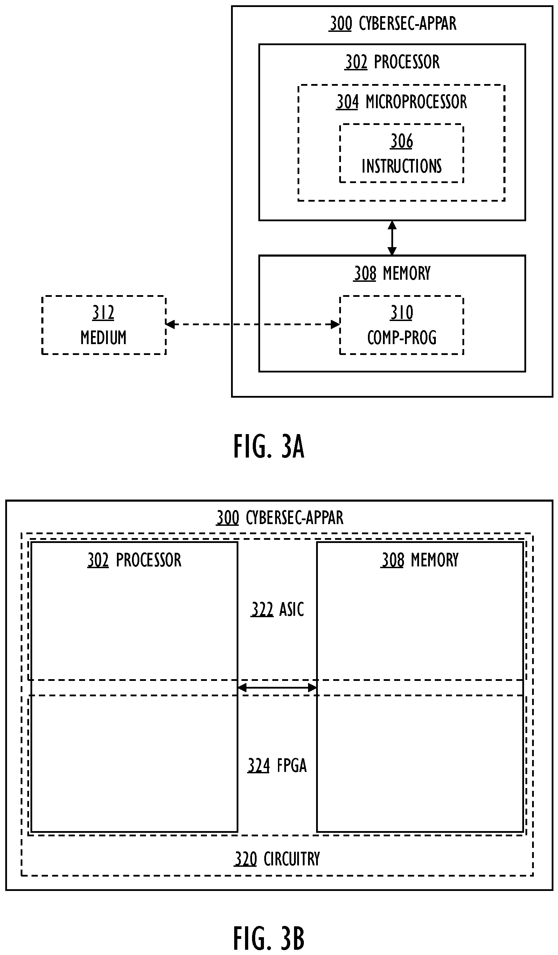

FIG. 3A and FIG. 3B are block diagrams illustrating examples of a cybersecurity apparatus 300. The method described with reference to FIG. 1A, FIG. 1B, FIG. 1C, FIG. 1D, and FIG. 1E may be implemented by the cybersecurity apparatus 300. The apparatus 300 may execute the operations defined in the method. The apparatus 300 may implement an algorithm, which includes the operations of the method, but may optionally include other operations related to the cybersecurity in general. Note that the method described with reference to FIG. 1A and FIG. 1B may be implemented as a part of the cybersecurity client 252, 256 running in the customer-premises equipment 230, 232 as shown in FIG. 2A and FIG. 2B. As shown in FIG. 2A and FIG. 2B, the cybersecurity apparatus 300 may comprise various distributed actors 252, 254, 256 communicatively coupled 270, 272 with each other.

The operations of the method may be implemented in connection with various other aspects of cybersecurity operations, such as a device identification, device intelligence, household intelligence, and application detection, for example.

Various artificial intelligence (AI) technologies executed in the customer-premises equipment 230, 232 and/or in the computing resource 256 may be used for the implementation. Machine learning (ML) algorithms in general analyze data related to the connected devices 200, 206, 212 and their wireless data transmissions 280, 282, 284 traffic via the customer-premises equipment 230, 232 to identify patterns related to the device identification and detecting errors in the device identification. The machine learning algorithms are able to adapt and improve over time, thereby detecting error in evolving environments. Clustering algorithms are unsupervised learning algorithms that group similar data points together, helping in device identification based on the wireless data transmissions 280, 282, 284. Rule-based algorithms rely on predefined rules to detect errors in the device identification. Deep learning is a subset of machine learning that uses neural networks with many layers to analyze complex behavior patterns in large datasets.

The cybersecurity apparatus 300 comprises one or more memories 308, and one or more processors 302 coupled to the one or more memories 308 configured to execute the operations described in FIG. 1A, FIG. 1B, FIG. 1C, FIG. 1D, and FIG. 1E.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as Go, Java, C, or C++, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASIC) 322, field-programmable gate arrays (FPGA) 324, application-specific standard products (ASSP), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

The monitoring 120/150, 122/154, 160 of the wireless data transmission 280, 282, 284, and detecting 106 of the additional data, may be performed in connection with the customer-premises equipment 230, 232, such as by the cybersecurity client 252, 256. The identifying 102 of the first connected device 200, the identifying 104 of the second connected device, and the determining 108 whether the false negative identity error or the false positive identity error were made may be performed by the cybersecurity client 252, 256, and/or by the cybersecurity server 254.

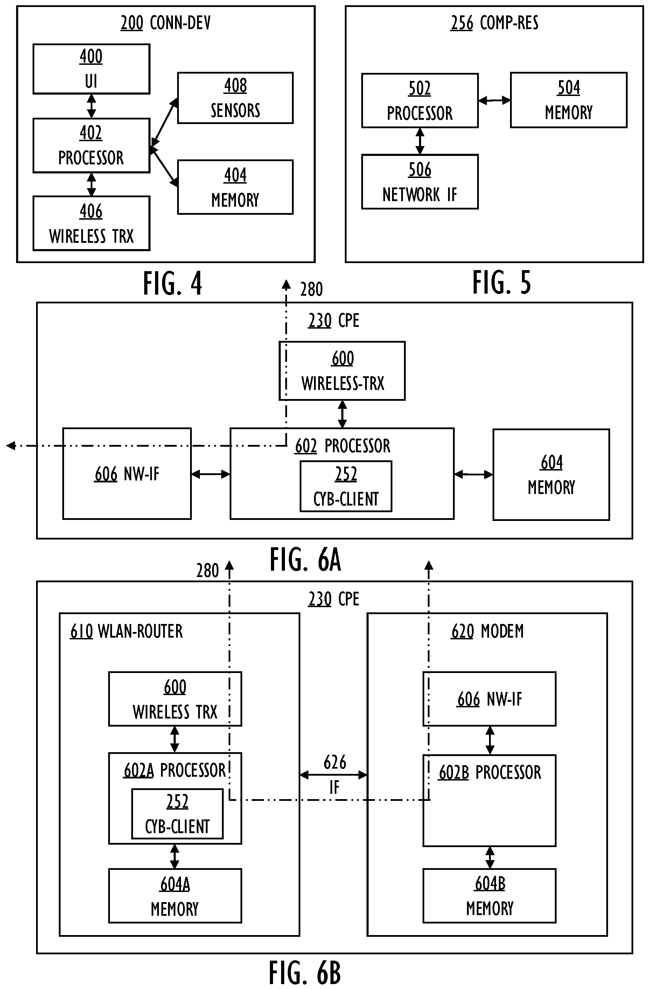

FIG. 4 is a block diagram illustrating an example of the connected device 200, 206, 212. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smart glasses, another kind of ubiquitous computing device, or some other type of a wired or wireless mobile or stationary communication device operating with or without a subscriber identification module (SIM) or an embedded SIM (eSIM). The connected device 200, 206, 212 may be a personal communication device of the user 204, 210, 216. The connected device 200 may also be an IoT device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 404, and one or more processors 402 coupled to the one or more memories 404 configured to carry out a functionality of the connected device 200. In addition, the connected device 200 comprises a user interface 400 (such as a touch screen or one or more LEDs), and one or more wireless transceivers 406 (such as a WLAN transceiver, a cellular radio network transceiver, and a short-range radio transceiver), and also one or more sensors 408.

FIG. 5 is a block diagram illustrating an example of a computing resource 256 such as a server apparatus. The server apparatus 256 may be a networked computer server, which interoperates with the customer-premises equipment 230, 232 according to a client-server architecture, a cloud computing architecture, a peer-to-peer system, or another applicable distributed computing architecture. As shown in FIG. 5, the server apparatus 256 comprises one or more memories 504, and one or more processors 502 coupled to the one or more memories 504 configured to carry out the functionality of the cybersecurity server 254. In addition, the server apparatus 256 comprises a network interface (such as an Ethernet network interface card) 506 configured to couple the server apparatus 256 to the Internet 224.

FIG. 6A and FIG. 6B are block diagrams illustrating examples of the (first, second, third) customer-premises equipment (CPE) 230, 232.

The customer-premises equipment 230 is located in the household 220 (usually at home but in some cases maybe at office) of the users 204, 210, 216 of the connected devices 200, 206, 212. The customer-premises equipment 230 is stationary equipment connected to a telecommunication circuit of a carrier such as the network service provider (NSP) offering internet access using broadband or fixed wireless technologies at a demarcation point. The demarcation point may be defined as a point at which the public Internet 224 ends and connects with the LAN 222, 226 at the home or office. In this way, the customer-premises equipment 230 acts as a network bridge, and/or a router.

The customer-premises equipment 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222, 226 and thus enabling the user 204, 210, 216 of the connected device 200, 206, 212 to access communication services of the NSP, and the Internet 224. Note that the customer-premises equipment 230 may also be implemented with wireless technology, such as a 4G or 5G customer-premises equipment 230 configured to exchange a 5G cellular radio network signal with the WAN 224 of a base station operated by the broadband service provider, and generate a Wi-Fi^{®} (or WLAN) or wired signal to implement the LAN 222, 226 to provide access for the connected device 200, 206, 212. Furthermore, the 4G/5G customer-premises equipment 230 performs the conversion between the 4G/5G cellular radio network signal and the Wi-Fi^{®} or wired signal.

In FIG. 6A, the customer-premises equipment 230 is an integrated apparatus comprising one or more memories 604, and one or more processors 602 coupled to the one or more memories 604 configured to carry out a part of the method/algorithm in some examples. Additionally, the customer-premises equipment 230 comprises a wireless radio transceiver 600 configured to create the WLAN 222 for enabling access by the connected device 200. The customer-premises equipment 230 also comprises a network interface 606 to act as a modem configured to connect to the telecommunication circuit of the carrier at the demarcation point, i.e., to the WAN 224. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The customer-premises equipment 230, 232 may be running the cybersecurity client 252, 256.

In FIG. 6B, the customer-premises equipment 230 is a two-part apparatus. A WLAN router part 610 comprises the one or more memories 604A, the one or more processors 602A coupled to the one or more memories 604A configured to carry out the method/algorithm, and the wireless radio transceiver 600 to create the LAN 222 for enabling access by the connected device 200. A modem part 620 comprises the one or more processors 602B coupled to one or more memories 604B configured to carry out modem operations, and the network interface 606 to act as the modem configured to connect to the WAN 224. The WLAN router part 610 may be purchased by the user 204 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 252, 256 another component running on the customer-premises equipment 230, 232 may be configured to run a part of the algorithm implementing the method in some examples.

The customer-premises equipment 230, 232 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the customer-premises equipment 230, 232 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 252, 256, and the cybersecurity server 254 in different configurations. In an example, the cybersecurity client 252, 256 communicates 270, 272 with the cybersecurity server 254 to implement the method/algorithm functionality.

Thus, the cybersecurity client 252, 256 may in a stand-alone fashion carry out the method/algorithm, or a part of the method/algorithm functionality may be augmented by the functionality of the cybersecurity server 254. The cybersecurity client 252, 256 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200, 206, 212 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
identifying (102) a first connected device based on a first data transmission to a first customer-premises equipment of a network;
identifying (104) a second connected device based on a second data transmission to a second customer-premises equipment of the network; and
in response to detecting (106) additional data related to the first connected device and the second connected device, determining (108) whether one of a false negative identity error or a false positive identity error was made in identifying (104) the second connected device based on the second data transmission to second the customer-premises equipment of the network.

2. The method of claim 1, wherein identifying (104) the second connected device based on the second data transmission to the second customer-premises equipment of the network further comprises:
identifying (124) the second connected device, based on the second data transmission to the second customer-premises equipment of the network, as a new connected device.

3. The method of claim 2, wherein detecting (106) the additional data related to the first connected device and the second connected device further comprises:
determining (126) a co-activity of the first connected device and the second connected device, wherein the co-activity defines a degree of the first connected device and the second connected device being simultaneously connected to the network, and
wherein determining (108) whether one of the false negative identity error or the false positive identity error was made in identifying (104) the second connected device based on the second data transmission to the second customer-premises equipment of the network further comprises:
determining (128), based on the co-activity, whether the false negative identity error was made in identifying (124) the second connected device, based on the second data transmission to the second customer-premises equipment of the network, as the new connected device, wherein the false negative identity error is caused by incorrectly identifying (124) the second connected device, based on the second data transmission to the second customer-premises equipment of the network, as the new connected device.

4. The method of claim 3, wherein determining (128), based on the co-activity, whether the false negative identity error was made in identifying (124) the second connected device, based on the second data transmission to the second customer-premises equipment of the network, as the new connected device further comprises:
in response to the co-activity indicating (130-YES) that the first connected device and the second connected device were simultaneously connected to the network, determining (132) that the first connected device and the second connected device are different connected devices, and detecting (134) that the false negative identity error was not made in identifying (124) the second connected device, based on the second data transmission to the second customer-premises equipment of the network, as the new connected device.

5. The method of claim 3, wherein determining (128), based on the co-activity, whether the false negative identity error was made in identifying (124) the second connected device, based on the second data transmission to the second customer-premises equipment of the network, as the new connected device further comprises:
in response to the co-activity indicating (130-NO) that the first connected device and the second connected device were not simultaneously connected to the network during at least a predetermined time period, determining (136) that the first connected device and the second connected device are a same connected device, and detecting (138) that the false negative identity error was made in identifying (124) the second connected device, based on the second data transmission to the second customer-premises equipment of the network, as the new connected device.

6. The method of claim 3, wherein determining (128), based on the co-activity, whether the false negative identity error was made in identifying (124) the second connected device, based on the second data transmission to the second customer-premises equipment of the network, as the new connected device further comprises:
in response to the co-activity indicating (140-YES) that an intermediate time period between when the second connected device was connected to the network after the first connected device disconnected from the network is shorter than a predetermined time length, determining (142) that the first connected device and the second connected device are a same connected device, and detecting (144) that the false negative identity error was made in identifying (124) the second connected device, based on the second data transmission to the second customer-premises equipment of the network, as the new connected device.

7. The method of any preceding claim, further comprising:
prior to identifying (102) the first connected device based on the first data transmission to the first customer-premises equipment of the network, monitoring (120) the first data transmission to the first customer-premises equipment of the network; and
prior to identifying (104) the second connected device based on the second data transmission to the second customer-premises equipment of the network, monitoring (122) the second data transmission to the second customer-premises equipment of the network.

8. The method of any preceding claim, wherein identifying (104) the second connected device based on the second data transmission to the second customer-premises equipment of the network further comprises:
identifying (156) the second connected device based on the second data transmission to the second customer-premises equipment of the network as being a same connected device as the first connected device.

9. The method of claim 8, wherein the first data transmission is related to a first periodically stable identifier value, wherein the second data transmission is related to a second periodically stable identifier value, and wherein detecting (106) the additional data related to the first connected device and the second connected device further comprises:
detecting (162) a third data transmission to a third customer-premises equipment of the network, wherein the third data transmission is related to the first periodically stable identifier value, and
wherein determining (108) whether one of the false negative identity error or the false positive identity error was made in identifying (104) the second connected device based on the second data transmission to the second customer-premises equipment of the network further comprises:
determining (164), based on the first periodically stable identifier value and the second periodically stable identifier value, that the first connected device and the second connected device are different connected devices; and
detecting (166) that the false positive identity error was made in identifying (156) the second connected device, based on the second data transmission to the second customer-premises equipment of the network, as being the same connected device as the first connected device, wherein the false positive identity error is caused by incorrectly identifying (156) the second connected device, based on the second data transmission to the second customer-premises equipment of the network, as being the same connected device as the first connected device.

10. The method of claim 9, wherein identifying (102) the first connected device based on the first data transmission to the first customer-premises equipment of the network further comprises:
assigning (152) a first device identifier to the first connected device,
wherein identifying (104) the second connected device based on the second data transmission to the second customer-premises equipment of the network further comprises:
assigning (158) the first device identifier to the second connected device, and
wherein detecting (166) that the false positive identity error was made in identifying (156) the second connected device based on the second data transmission to the second customer-premises equipment of the network as being the same connected device as the first connected device further comprises:
assigning (168) the first device identifier to a third connected device; and
assigning (170) a second device identifier to the second connected device.

11. The method of any preceding claim 9 to 10, wherein the first periodically stable identifier value comprises a first random media access control, MAC, address, and the second periodically stable identifier value comprises a second random MAC address.

12. The method of any preceding claim 8 to 11, further comprising:
prior to identifying (102) the first connected device based on the first data transmission to the first customer-premises equipment of the network, monitoring (150) the first data transmission to the first customer-premises equipment of the network;
prior to identifying (104) the second connected device based on the second data transmission to the second customer-premises equipment of the network, monitoring (154) the second data transmission to the second customer-premises equipment of the network; and
prior to detecting (162) the third data transmission to the third customer-premises equipment of the network, monitoring (160) the third data transmission to the third customer-premises equipment of the network.

13. The method of any preceding claim, wherein the first customer-premises equipment and the second customer-premises equipment are a same customer-premises equipment.

14. The method of claim 13, wherein the third customer-premises equipment is the same customer-premises equipment.

15. An apparatus comprising means for carrying out the method of any preceding claim 1-14.

16. A computer program product comprising instructions which, when executed by an apparatus, cause the apparatus to carry out the method of any preceding claim 1-14.

17. A computer-readable medium comprising a computer program with instructions which, when executed by an apparatus, cause the apparatus to carry out the method of any preceding claim 1-14.
